# EUROPEAN PATENT SPECIFICATION

(11) **EP 3 556 999 B1**
(45) Date of publication and mention of the grant of the patent: **24.02.2021**
(21) Application number: 19169891.9
(22) Date of filing: 17.04.2019
(51) Int. Cl.: F01D 5/18, B22C 9/04

(54) **DOUBLE WALL AIRFOIL COOLING CONFIGURATION FOR GAS TURBINE ENGINE**
DOPPELWANDIGE SCHAUFELKÜHLKONFIGURATION FÜR GASTURBINENMOTOREN
CONFIGURATION DE REFROIDISSEMENT DE SURFACE PORTANTE À DOUBLE PAROI POUR MOTEUR À TURBINE À GAZ

(30) Priority: 17.04.2018 US 201815954879
(43) Date of publication of application: 23.10.2019
(73) Proprietor: United Technologies Corporation, Farmington, CT 06032 (US)
(72) Inventor: XU, JinQuan, East Greenwich, RI Rhode Island 02818 (US)
(74) Representative: Dehns

(56) References cited:
- EP-A1- 3 012 407
- DE-A1- 10 236 676
- US-A- 4 946 346
- US-A- 5 720 431
- US-A1- 2015 152 734
- US-A1- 2015 184 521

## Description

### BACKGROUND

This disclosure relates to gas turbine engines and particularly to internally cooled airfoils of rotor blades and stator vanes.

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

As is well known, the aircraft engine industry is experiencing a significant effort to improve the gas turbine engine's performance while simultaneously decreasing its weight. The ultimate goal has been to attain the optimum thrust-to-weight ratio. One of the primary areas of focus to achieve this goal is the "hot section" of the engine since it is well known that engine's thrust/weight ratio is significantly improved by increasing the temperature of the turbine gases. However, turbine gas temperature is limited by the metal temperature constraints of the engine's components. Significant effort has been made to achieve higher turbine operating temperatures by incorporating technological advances in the internal cooling of the turbine blades.

Serpentine core cooling passages have been used to cool turbine blades. The serpentine cooling passage is arranged between the leading and trailing edge core cooling passages in a chord-wise direction. One typical serpentine configuration provides "up" passages arranged near the leading and trailing edges fluidly joined by a "down" passage. This type of cooling configuration may have inadequacies in some applications. To this end, a double wall cooling configuration has been used to improve turbine blade cooling.

In a double wall blade configuration, thin hybrid skin core cavity passages extend radially and are provided in a thickness direction between the core cooling passages and each of the pressure and suction side exterior airfoil surfaces to separate "hot" and "cold" walls. Double wall cooling has been used as a technology to improve the cooling effectiveness of a turbine blades, vanes, blade out air seals, combustor panels, or any other hot section component. Often, core support features are used to form resupply holes and interconnect a main body core to a hybrid skin core. The main body core creates the core passages, and the hybrid skin core creates the skin passages.

Some turbine stator vanes incorporate an internal radially extending baffle, which is supported with respect to the outer airfoil wall by interiorly extending radial ribs. The baffle is typically constructed from a thin sheet of metal and is arranged centrally within the airfoil. Cooling fluid is supplied to the baffle through, for example, an outer platform. Holes in the baffle provide impingement cooling from the baffle onto an inner surface of the outer airfoil, or "hot", wall.

With traditional double wall configurations, a cooling benefit is derived from passing coolant air from the internal radial flow and/or serpentine cavities through the "cold" wall via cooling holes (aka resupply holes) and impinging the flow on the "hot" wall. The cooling effectiveness of airfoils having a double wall arrangement is affected by a variety of factors, including cooling hole geometry provided in the "cold" wall. The relative thinness of the inner, "cold" wall can limit the cooling hole geometry that can be used, which may limit the cooling effectiveness of the airfoil.

A prior art airfoil, having the features of the preamble of claim 1, is disclosed in US 2015/184521 A1. Further prior art airfoils are disclosed in DE 10236676 A2, EP 3012407 A1 and US 4,946,346 A.

### SUMMARY

According to the invention an airfoil as set forth in claim 1, a gas turbine engine as set forth in claim 12 and a casting mold for an airfoil as set forth in claim 13 are provided. Further aspects of the invention are set forth in the dependent claims.

### BRIEF DESCRIPTION OF THE DRAWINGS

The disclosure can be further understood by reference to the following detailed description when considered in connection with the accompanying drawings wherein:
Figure 1 schematically illustrates a gas turbine engine embodiment.
Figure 2 is a schematic view through an engine section including a fixed stage and a rotating stage.
Figure 3 is a schematic view of a stator vane and associated cooling path.
Figure 4 is a cross-sectional view through an airfoil depicted in Figure 3 taken along line 4-4.
Figure 5A is a perspective view of the airfoil having the disclosed cooling passage.
Figure 5B is a plan view of the airfoil illustrating directional references.
Figure 5C is a cross-sectional view taken along line 5C-5C of Figure 5A.
Figure 6 is a sectional view taken along line 6-6 of Figure 5A.
Figure 7 depicts a portion of the core and skin passages and flow therethrough.
Figures 7A-7E are cross-sectional views of various example double wall cooling hole protrusions.
Figures 8A and 8B are elevational and cross-sectional views of a first cooling hole embodiment.
Figures 9A and 9B are elevational and cross-sectional views of a second cooling hole embodiment.
Figures 10A and 10B are elevational and cross-sectional views of a third cooling hole embodiment.
Figure 11 illustrates a second angle of a cooling hole to the skin passage.
Figure 12 depicts a cooling hole embodiment and diffuser geometry.
Figure 13 depicts another cooling hole embodiment and diffuser geometry.
Figure 14 depicts yet another cooling hole embodiment and diffuser geometry.
Figure 15 is a schematic cross-sectional view of a core assembly used to form the double wall airfoil with cooling passages and cooling holes.

### DETAILED DESCRIPTION

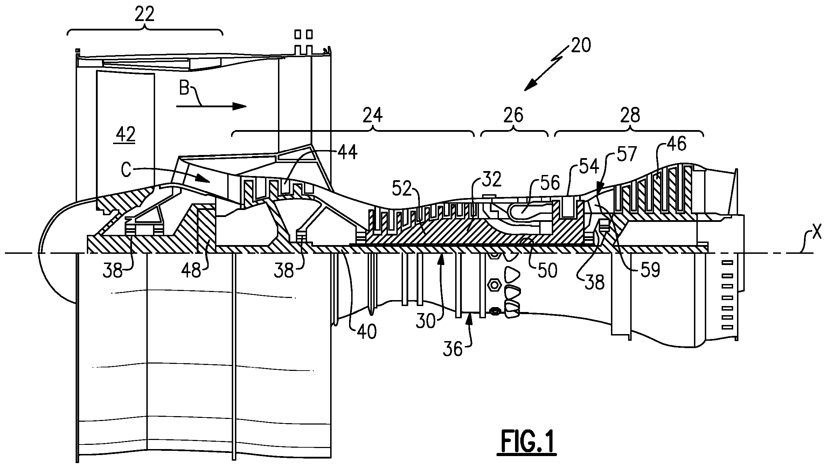

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and geared architecture 48 may be varied. For example, geared architecture 48 may be located aft of combustor section 26 or even aft of turbine section 28, and fan section 22 may be positioned forward or aft of the location of geared architecture 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

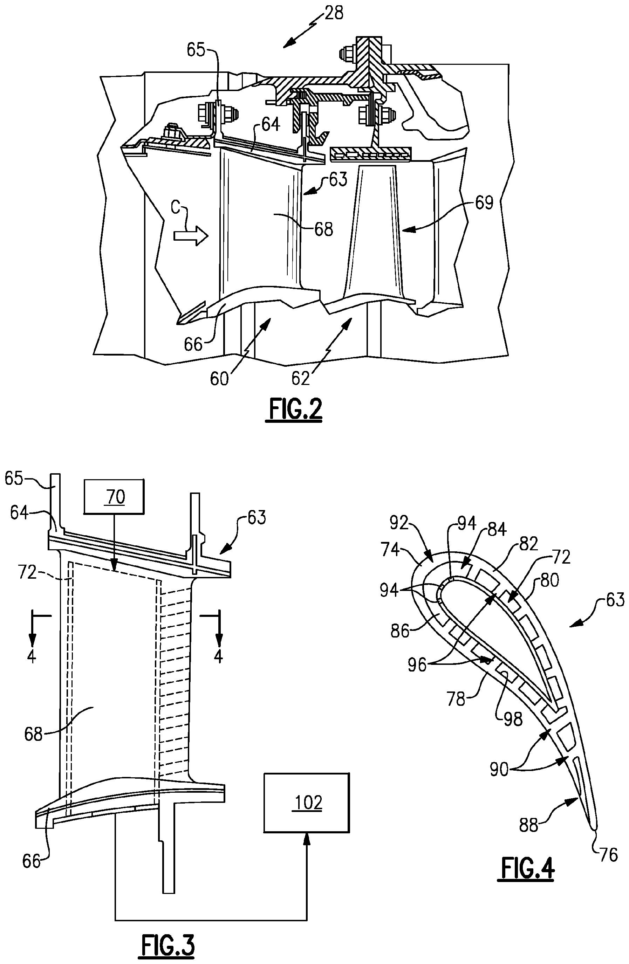

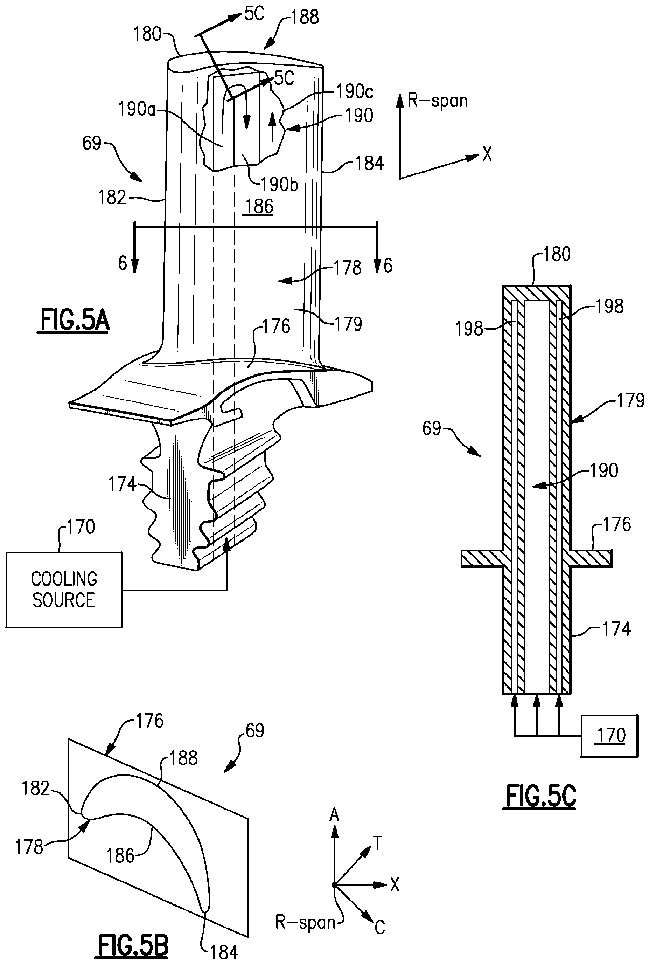

The disclosed cooling configuration is particularly beneficial for turbine blades and vanes of a gas turbine engine where internal cooling of the airfoil is desired, although the disclosed arrangement may also be used in the compressor section. For exemplary purposes, a double wall stator vane 63 is described in connection with Figures 3-4, and a double wall turbine blade 69 is described in connection with Figures 5A-6.

Referring to Figure 2, a portion of an engine section is shown, for example, a turbine section. It should be understood, however, that disclosed section also may be provided in a compressor section.

The section includes a fixed stage 60 that provides a circumferential array of vanes 63 arranged axially adjacent to a rotating stage 62 with a circumferential array of blades 69. In the example, the vanes 63 include an outer diameter portion 64 having hooks 65 that support the array of vanes 63 with respect to a case structure. An airfoil 68 extends radially from the outer platform 64 to an inner diameter portion or platform 66. It should be understood that the disclosed vane arrangement could be used for vane structures cantilevered at the inner diameter portion of the airfoil.

Referring to Figure 3, a cooling source 70, such as bleed air from the compressor section 24, provides a cooling fluid to a baffle 72 arranged within a cooling cavity of the stator vane 63. The baffle 72 provides an inner "cold" wall in the double wall arrangement. In the example, the cooling fluid flows into the baffle 72 through the outer platform 64. Cooling fluid exits the baffle 72 through the inner platform 66 and flows to a component 102.

Referring to Figure 4, an exterior wall 82, which is a "hot" wall, provides pressure and suction sides 78, 80 that are joined at leading and trailing edges 74, 76. The space between the baffle 72 and the exterior wall 82 provides an outer cooling passage, and the interior of the baffle 72 provides a core cooling passage. The exterior wall 82 and the baffle 72 define a cooling cavity 84 within which the baffle 72 is arranged. A perimeter cavity 86 is provided between the baffle 72 and the exterior wall 82.

One or more ribs (or pin fins) 90 are provided between and connect the pressure and suction sides 78, 80. In one example, the one or more ribs 90 extend radially. The ribs 90 separate a trailing edge cooling cavity 88 from the perimeter cavity 86. In one example, holes may be provided in the ribs 90 to provide cooling fluid from the perimeter cavity 86 into the trailing edge cooling cavity 88. Fluid exits the trailing edge 76 as is known. In another example, the one or more ribs extend axially or extend with an angle.

An impingement cooling arrangement 92 is provided to cool the leading edge 74. In the example, a portion of the baffle 72 includes impingement cooling holes 94 that provide impingement cooling fluid to an interior or backside of the exterior wall 82 at the leading edge 74.

In one example, the baffle 72 is provided by sheet steel, for example, a single sheet, and includes an outer contour generally free of protrusions. The outer contour is provided by plastic deformation. In another example, the baffle may be cast. The cooling holes, such as the impingement cooling holes 94, are provided in the baffle 72 using at least one of drilling, laser drilling, electro discharge machining, or casting.

The exterior wall 82 includes an interior surface 98 from which multiple pin fins extend interiorly to a terminal end. Alternatively, the pin fins may extend outward from the baffle to a terminal end. The terminal end supports the baffle 72, which is a separate, discrete structure from the exterior wall 82 in the example. In one example, the pin fins 96 are arranged in rows and radially spaced from one another, as best shown in Figure 4. The pin fins 96 are integrally formed with the exterior wall, which may be formed from a nickel alloy. In one example, the pin fins 96 provide the support for the baffle 72 in the perimeter cavity 86. Radially extending ribs may be used to support the baffle 72 in addition to or instead of the pin fins 96.

The blade 69 also includes a double wall arrangement. Referring to Figures 5A and 5B, a root 174 of each blade 69 is mounted to a rotor disk. The blade 69 includes a platform 176, which provides the inner flow path, supported by the root 174. An airfoil 178 extends in a radial direction R from the platform 176 to a tip 180. It should be understood that the turbine blades may be integrally formed with the rotor such that the roots are eliminated. In such a configuration, the platform is provided by the outer diameter of the rotor. The airfoil 178 provides leading and trailing edges 182, 184. The tip 180 is arranged adjacent to a blade outer air seal (not shown).

The airfoil 178 of Figure 5B somewhat schematically illustrates an exterior airfoil surface 179 extending in a chord-wise direction C from a leading edge 182 to a trailing edge 184. The airfoil 178 is provided between pressure (typically concave) and suction (typically convex) walls 186, 188 in an airfoil thickness direction T, which is generally perpendicular to the chord-wise direction C. Multiple turbine blades 69 are arranged circumferentially in a circumferential direction A. The airfoil 178 extends from the platform 176 in the radial direction R, or spanwise, to the tip 180.

In the example, the airfoil 178 includes a serpentine cooling passage 190 provided between the pressure and suction walls 186, 188. The serpentine cooling passage 190 provides a core cooling passage. The disclosed skin core and cooling hole arrangement may be used with other cooling passage configurations, including non-serpentine cooling passage arrangements. As will be appreciated from the disclosure below, it should be understood that the central core passages from which resupply flow is bled might consist of a single radial core passage, and or multiple radial central core passages. Additionally one or more radial flow central core cooling passages may also be combined with a central core passage serpentine consisting of two or more continuous central cooling passages from which resupply flow may also be supplied.

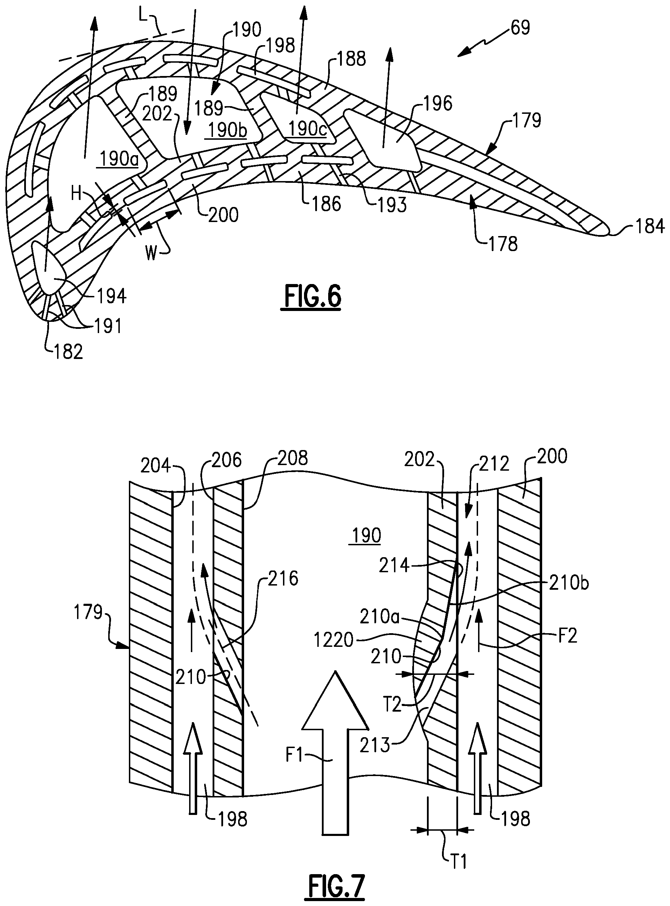

Referring to Figure 6, leading and trailing edge cooling passages 194, 196 are respectively provided near the leading and trailing edges 182, 184 as "up" passages refer to cooling passages that transport cooling fluid radially outward away from the engine centerline, in a direction towards a larger radial outboard location. Conversely, "down" passages, refer to cooling passages that transport cooling fluid radially inward toward the engine centerline, in a direction towards a smaller inboard location. The serpentine cooling passage 190 includes a first ("up") passage 190a near the leading edge cooling passage 194 that flows into a second ("down") passage 190b, which flows into a third ("up") passage 190c near the trailing edge cooling passage 196. The first, second and third passages 190a, 190b, 190c are separated by ribs 189. The serpentine cooling passage 190 and the leading and trailing edge cooling passages 194, 196 are referred to as "central main-body core" passages. The airfoil's mean camber line bisects the core passages in the example shown. The exterior airfoil surface 179 may include multiple film cooling holes 191, 193 in fluid communication with the cooling passages 190, 194, 196 to create a thin film boundary layer that protects the exterior airfoil 178 from hot gases in the core flow path C.

Referring to Figures 5A and 5C, a cooling source 170, such as bleed air from the compressor section 24, may be fluidly connected to the cooling passages 190, 194, 196 and hybrid skin core cavity cooling passages 198 to cool the blade 62.

As shown in Figures 5C and 6, the hybrid skin core cavity cooling passages 198, which provides an outer cooling passage, may be provided in the pressure and suction walls 186, 188, which separate these walls into a hot side wall 200 and a cold side wall 202. The hot and cold side walls 200, 202 are integral with one another in the disclosed example blade. The hot side wall 200 provides the exterior airfoil surface 179 and an outer surface 204 of the hybrid skin core cooling cavity cooling passage 198. The cold side wall 202 provides an inner surface 206 of the hybrid skin core cavity cooling passage 198 and a central core cooling passage surface 208 of the central core cooling passage. The film cooling holes 193 may be fluidly connected to the hybrid skin core cavity cooling passages (skin passages) 198.

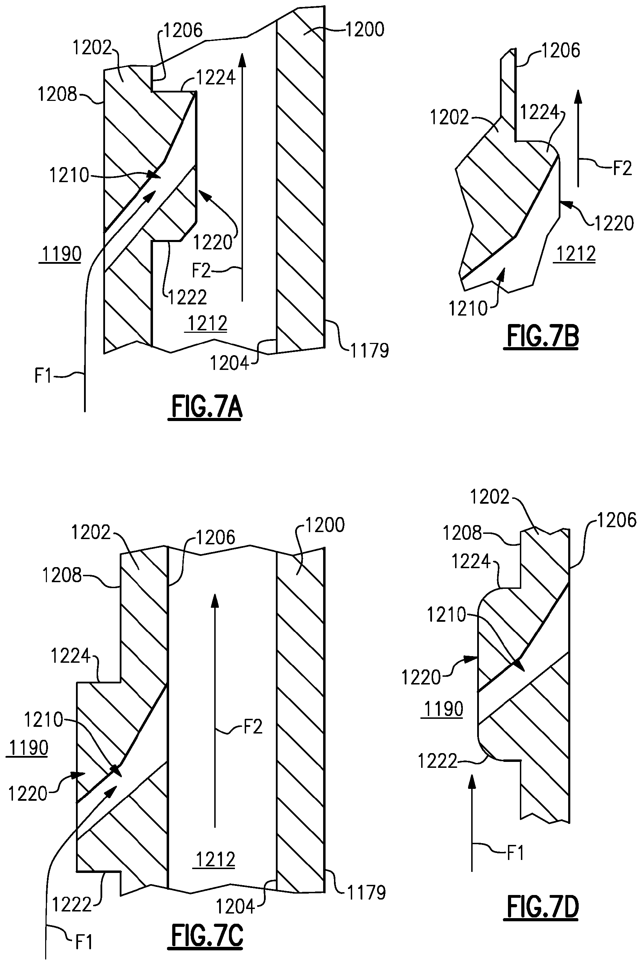

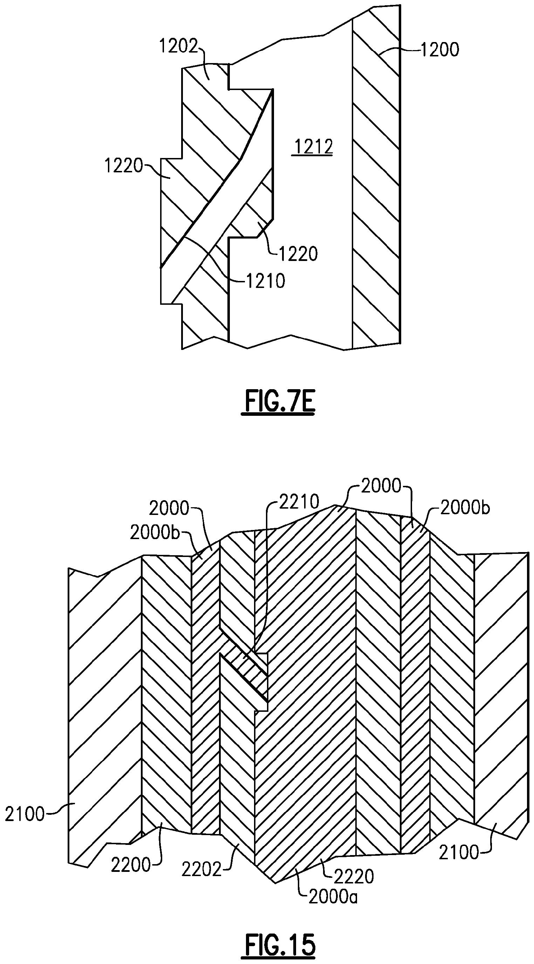

Referring to Figure 7, holes 210 (herein after referred to as cooling holes or resupply holes) extend through the cold side wall 202 to fluidly interconnect the core passages, for example, serpentine passage 190, at an inlet 213 and an exit 214 of the hybrid skin core cavity cooling passages 198, i.e, the outer cooling passage for cooling and resupplying cooling flow to the hybrid skin core cavity cooling passages 198. In one example, the cooling hole 210 comprises a metering section 210a and a diffuser section 210b (right side of Fig. 7), although the cooling hole 210 may have a constant cross-section or other suitable shape (left side of Fig. 7). With continuing reference to Figure 7, the cold side wall 202 has a first thickness T1 and a protrusion 1220 extends from the cold side wall 202 beyond the first thickness T1 to a second thickness T2. The cooling hole 210 is arranged at least partially in the protrusion 1220. In the example, the first thickness T1 of the cold side wall 202 circumscribes the protrusion 1220. That is, the thicker-walled protrusion 1220 is surrounded by a thinner-walled portion of the cold side wall 202. The protrusion 1220 enables more aerodynamically-optimized cooling hole geometries to be incorporated into thin walls that otherwise could not accommodate such features. One such feature may be the diffuser 210b and another feature may be the metering section 210a of certain length/diameter ratio. The protrusion 1220 may also act as a turbulator for enhancing heat transfer.

Referring to Figures 7A-7D, the double wall arrangement includes a hot side wall 1200 having an exterior airfoil surface 1179. The hot wall 1200 is spaced apart from a cold side wall 1202 by an outer cooling passage 1212, which is defined by outer and inner surfaces 1204, 1206. A core cooling passage 1190 is arranged on the opposite side of the cold side wall 1202 from the outer cooling passage 1212 and has a cooling passage surface 1202. A first flow F1 flows through the core cooling passage 1190, and a second flow F2 flows through the outer cooling passage 1212. The cooling hole 1210 fluidly interconnects the core and outer cooling passages 1190, 1212 to one another.

The protrusion 1220 may be provided on either side of the cold side wall 1202, that is, in the outer cooling passage 1212 (Figs. 7A and 7B) and/or the core cooling passage 1190 (Figs. 7C and 7D). In one example, the outlet of the cooling hole 1210 is arranged at the protrusion 1220 (Figs 7A and 7B). In another example, the inlet of the cooling hole 1210 is arranged at the protrusion 1220 (Figs. 7C and 7D), which may allow cleaner fluid to enter the cooling hole 1210. In another example, shown in Figure 7E, the protrusion is provided on both sides of the cold side walls, that is, in the outer cooling passage and the core cooling passage.

The protrusion 1220 has leading and trailing surfaces 1222, 1224 with respect to the flow direction that are designed to achieve a desired flow characteristic. For example, the leading surface 1222 may have a sharp corner to generate turbulent flow for enhanced cooling and/or block debris for cleaner airflow. The leading surface 1222 may have a smooth contour to encourage laminar flow over the cooling hole 1210. The trailing surface 1224 may have a sharp corner to generate a recirculation flow or tumble downstream from the cooling hole 1210, or a smooth contour.

The cooling holes 210 may have various shapes. One or more cooling holes 210 may be fluidly connected to each discrete skin passage 198, or outer cooling passage. The exit 214 may provide a diffuser (right cooling hole 210 in Figure 7), if desired.

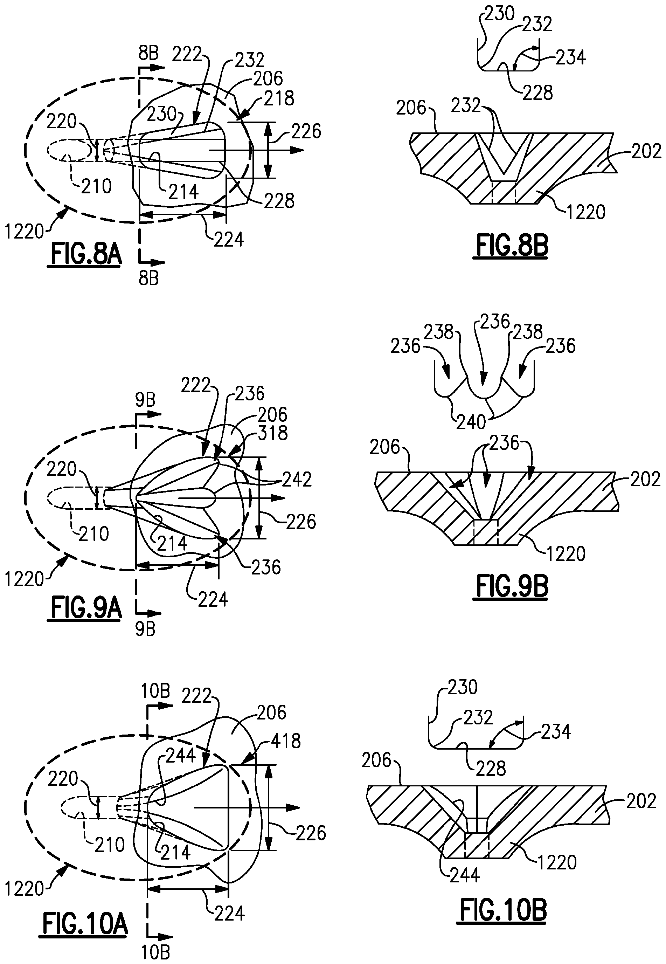

Different diffuser geometries 218, 318, 418 are shown in Figures 8A-10B. The cooling hole 210 includes an inlet hydraulic diameter 220 that enlarges to a diffuser hydraulic diameter 222 provided by the diffuser 218. The diffuser 218, 318, 418 provides an aperture provided on an inner surface 206 of the cold wall 202 facing the hot side wall 200. The aperture includes a length 224 and a width 226 and a ratio of length to width in a range of 0.5:1 to 3:1. In the example shown in Figure 8A, the ratio is about 2:1, and in the example shown in Figure 9A, the ratio is about 1:1.

Referring to Figures 8A-8B, the diffuser 218 has a bottom wall 228 joined at obtuse angles 234 to laterally spaced apart side walls 230 at intersections 232 providing rounded corners. Referring to Figures 9A-9B, the diffuser 318 includes multiple lobes 236 having peaks 238 and valleys 240. The middle lobe in the example follows the direction of a centerline 216 of the cooling hole 210 in the Figure 9A view. The middle lobe follows the downstream diffuser angle, which may be different than the centerline 216. The lobes on either side of the cooling hole 210 diverge from the centerline 216 and follow the downstream and lateral expansion angles of the side lobes. The peaks 238 and valleys 240 provide scallops 242 in the inner surface 206. Referring to Figures 10A-10B, the diffuser 318 has a bottom wall 228 joined to laterally spaced apart side walls 230 at intersections 232. The bottom wall 228 narrows to a neck 244.

The exit hole geometry as illustrated in Figures 8A-10B are also exemplary. The geometries are chosen to attain a desired flow characteristic and a boundary layer within the hybrid skin core cooling cavity passage 198 or outer cooling passage based upon the desired pressure drop cooling and other characteristics for the airfoil in an application.

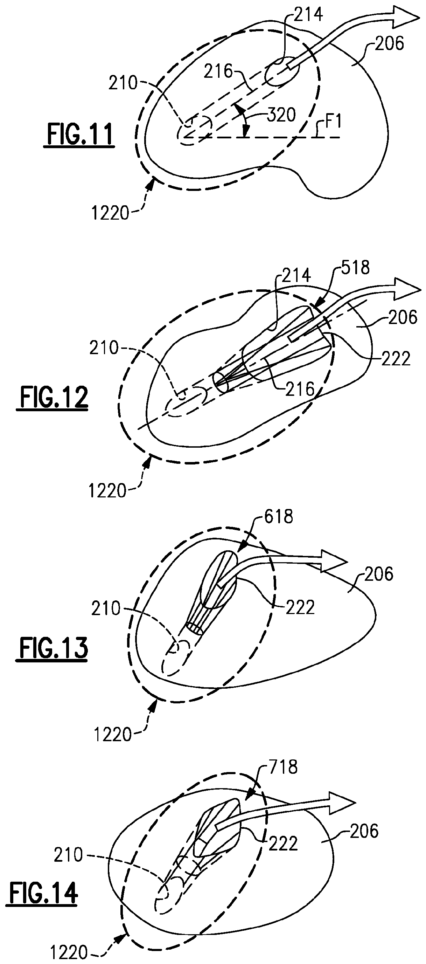

Figure 11 illustrates an angle 320 that lies in a plane parallel to the width direction of the skin passage 198. The angle 320 is at an acute angle in a range of 15°-75°, and in one example, in a range of 30°-60°. The angle 320 is configured to reduce mixing and provide a less turbulent flow region in the skin passage 198. The angle 320 being non-parallel with the direction of fluid flow enables the fluid in the skin passage 198 to provide more coverage. This reduction in mixing and increase in coverage reduces fluid heating at the end of the skin passage 198 and provides a larger area of cooled resupplied flow into the skin passage 198.

Supply holes 210 with a diffuser 518, 618, 718 are shown in Figures 12-14. In Figure 12, the exit 214 has an edge 222 at the inner surface 206 that is perpendicular to the centerline 216. In Figures 13 and 14, the edges 222, 222 are arranged at the inner surface 206 and perpendicular to the direction of fluid flow. Different diffuser geometries may be selected depending upon the desired flow characteristic.

The exit hole geometries, as illustrated in Figures 12-14, are exemplary. The geometries are chosen to attain a desired flow characteristic and a boundary layer within the hybrid skin core cooling cavity passage 198 based upon the desired pressure drop cooling and other characteristics for the airfoil in an application.

Using techniques typically used in external film cooling, one may orient the core support resupply cooling or cooling hole features in the streamwise direction of the cooling air flow in the hybrid skin core cavity cooling passage. By improving the relative alignment of the two separate flow streams the momentum mixing associated with the differences in the inertial Coriolis and buoyancy forces between the two separate flow streams will be significantly reduced. In so doing the high pressure losses typically observed between the two independent flow streams emanating from a cooling hole 210 oriented normal to the downstream flow field within the hybrid skin core cavity cooling passage 198 can be significantly reduced and the resulting mixing length can be dissipated quickly along the streamwise direction of cooling flow within the hybrid skin core cavity cooling passage. These techniques may also be used to manufacture the disclosed vane if an integral baffle is desired.

Additive manufacturing and Fugitive Core casting processes enable design flexibility in gas turbine manufacturing. One of the design spaces that additive opens up is in the design of ceramic cores used in the investment casting process. Traditional ceramic cores are made with a core die, which has a finite number of "pull planes." These pull planes restrict the design of ceramic cores to prevent features from overhanging in the direction that the die is pulled when the cores are removed. Additive manufacturing and Fugitive Core processes can remove those manufacturing restrictions, as dies are no longer required to create the ceramic cores of the internal cooling passages and internal convective cooling features, such as trip strips, pedestals, ribs, cooling holes, etc.

An additive manufacturing process may be used to produce an airfoil for the disclosed blade and vane. Alternatively, a core for casting may be constructed using additive manufacturing and/or Fugitive Core manufacturing may be used to provide the correspondingly shaped cooling hole geometries when casting the airfoil. These advanced manufacturing techniques enable unique core features to be integrally formed and fabricated as part of the entire ceramic core body and then later cast using conventional loss wax investment casting processes. Alternatively powdered metals suitable for aerospace airfoil applications may be used to fabricate airfoil cooling configurations and complex cooling configurations directly. The machine deposits multiple layers of powdered metal onto one another. The layers are joined to one another with reference to CAD data, which relates to a particular cross-section of the airfoil. In one example, the powdered metal may be melted using a direct metal laser sintering process or an electron-beam melting process. With the layers built upon one another and joined to one another cross-section by cross-section, an airfoil with the above-described geometries may be produced. The airfoil may be post-processed to provide desired structural characteristics. For example, the airfoil may be heated to reconfigure the joined layers into a single crystalline structure.

A casting mold is shown in Figure 15. The casting mold includes a core assembly 2000 includes central and outer core portions 2000a, 2000b that respectively provide the core cooling passage 1190 and the outer cooling passages 1212 (Figs. 7A-7E) when removed subsequent to casting (typically by dissolving the core). A small core structure 2210, which subsequently provides the cooling hole 1210 (Figs. 7A-7E) interconnects the central core portion 2000a and the outer core portions 2000b to one another. In one embodiment, the small core structure 2210 may be flexible. The protrusion 1220 (Figs. 7A-7E) is provided as an indentation on the core portions. The hot and cold walls 1200, 1202 (Figs. 7A-7E) respectively are provided by wax portions 2200, 2202, which are melted during the casting process. Outer ceramic shell 2100 defines the exterior airfoil surface 1179 (Fig. 7A). In this manner, the wax portions correspond with the airfoil structure post-casting, such that the outer shell and 2100 and core assembly 2000 together define the airfoil features described in this disclosure.

It should also be understood that although a particular component arrangement is disclosed in the illustrated embodiment, other arrangements would benefit herefrom. Although particular step sequences are shown, described, and claimed, it should be understood that steps may be performed in any order, separated or combined unless otherwise indicated and will still benefit from the embodiments of the present invention. Additionally it is important to note that any complex multifacetted cooling hole geometries that bridge centrally located core cooling passages and peripherally located cooling passages can be created at any number of radial, circumferential, and/or tangential locations within an internal cooling configuration. The quantity, size, orientation, and location will be dictated by the necessity to increase the local thermal cooling effectiveness and achieve the necessary thermal performance required to mitigate hot section part cooling airflow requirements, as well as, meet part and module level durability life, stage efficiency, module, and overall engine cycle performance and mission weight fuel burn requirements.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. An airfoil (178) comprising:
pressure and suction side walls (186,188) extending in a chord-wise direction (C) between leading and trailing edges (182,184), the pressure and suction side walls (186,188) extending in a radial direction (R) to provide an exterior airfoil surface (179);
a core cooling passage (190,194,196) arranged between the pressure and suction walls (186,188) in a thickness direction (T) and extends radially toward a tip (180);
an outer cooling passage (198) arranged in one of the pressure and suction side walls (186,188) to form a hot side wall (200) and a cold side wall (202), wherein the hot side wall (200) defines a portion of the exterior airfoil surface (179), and the cold side wall (202) defines a portion of the core cooling passage (190,194,196); and
a cooling hole (210;1210) fluidly interconnecting the core and outer cooling passages (190,194,196,198), wherein the cold side wall (202) has a first thickness (T1),
**characterized in that**:
the cold side wall (202) has a protrusion (1220) extending from the cold side wall (202) beyond the first thickness (T1) to a second thickness (T2), the cooling hole (210;1210) arranged at least partially in the protrusion (1220), and the cooling hole (210; 1210) includes a diffuser (210b;218;318;418).

2. The airfoil of claim 1, wherein the first thickness (T1) of the cold side wall (202) circumscribes the protrusion (1220).

3. The airfoil of claim 1 or 2, wherein the cooling hole (210;1210) includes an inlet (213) at the core cooling passage (190,194,196), and an outlet (214) at the outer cooling passage (198), and at least one of the inlet (213) and the outlet (214) is arranged at the protrusion (1220).

4. The airfoil of any preceding claim, wherein the protrusion (1220) is arranged in one of the core and outer cooling passages (190,194,196,198), the one of the core and outer cooling passages (190,194,196,198) configured to receive a fluid moving in a flow direction (F1), the protrusion (1220) has leading and trailing surfaces (1222,1224) with respect to the flow direction (F1).

5. The airfoil of claim 4, wherein the protrusion (1220) is provided in both of the core and outer cooling passages (190,194,196,198).

6. The airfoil of claim 4 or 5, wherein the leading surface (1222) has a corner and/or a smooth contour.

7. The airfoil of claim 4, 5 or 6, wherein the trailing surface (1224) has a corner and/or a smooth contour.

8. The airfoil of any preceding claim, wherein the airfoil (178) is a turbine blade (69), and the hot and cold side walls (200,202) are integral with one another.

9. The airfoil of any of claims 1 to 7, wherein the airfoil (178) is a stator vane (63), and the cold side wall (202) is provided by a baffle (72) supported by the hot side wall (200), the baffle (72) discrete from the hot side wall (200).

10. The airfoil of claim 9, wherein ribs and/or pin fins (96) support the baffle (72) relative to the hot side wall (200).

11. The airfoil of claim 10, wherein the hot side wall (200) includes the ribs and/or pin fins (96) that extend inwardly to support the baffle (72).

12. A gas turbine engine (20) comprising:
a combustor section (26) arranged fluidly between compressor (24) and turbine sections (28); and
the airfoil of any preceding claim arranged in the turbine section (28).

13. A casting mold for an airfoil (178) comprising:
a shell (2100) and a core assembly (2000) together defining pressure and suction side walls (186,188) extending in a chord-wise direction (C) between leading and trailing edges (182,184), the pressure and suction side walls (186,188) extending in a radial direction (R) to provide an exterior airfoil surface (179), a core cooling passage (190,194,196) is arranged between the pressure and suction walls (186,188) in a thickness direction (T) and extends radially toward a tip (180);
an outer cooling passage (190,194,196) arranged in one of the pressure and suction side walls (186,188) to form a hot side wall (200) and a cold side wall (202), wherein the hot side wall (200) defines a portion of the exterior airfoil surface (179), and the cold side wall (202) defines a portion of the core cooling passage (190,194,196); and
a cooling hole (210,1210) fluidly interconnects the core and outer cooling passages (190,194,196,198), and the cold side wall (202) has a first thickness (T1), **characterized in that**:
the cold side wall (202) has a protrusion (1220) extending from the cold side wall (202) beyond the first thickness (T1) to a second thickness (T2), the cooling hole (210;1210) arranged at least partially in the protrusion (1220), and the cooling hole (210;1210) includes a diffuser (210b;218;318;418).

## Patentansprüche

1. Schaufelprofil (178), umfassend:
eine Druck- und eine Saugseitenwand (186, 188), welche sich in einer Profilsehnenrichtung (C) zwischen einer Vorder- und einer Hinterkante (182, 184) erstrecken, wobei sich die Druck- und die Saugseitenwand (186, 188) in eine radiale Richtung (R) erstrecken, um eine äußere Schaufelprofilfläche (179) bereitzustellen;
einen Kernkühldurchgang (190, 194, 196), welcher zwischen der Druck- und der Saugwand (186, 188) in einer Dickenrichtung (T) angeordnet ist und sich radial in Richtung einer Spitze (180) erstreckt;
einen äußeren Kühldurchgang (198), welcher in einer der Druckseitenwand und der Saugseitenwand (186, 188) angeordnet ist, um eine heiße Seitenwand (200) und eine kalte Seitenwand (202) zu bilden, wobei die heiße Seitenwand (200) einen Abschnitt der äußeren Schaufelprofilfläche (179) definiert, und wobei die kalte Seitenwand (202) einen Abschnitt des Kernkühldurchgangs (190, 194, 196) definiert; und
ein Kühlloch (210; 1210), welches den Kernkühldurchgang und den äußeren Kühldurchgang (190, 194, 196, 198) fluidverbindet, wobei die kalte Seitenwand (202) eine erste Dicke (T1) aufweist,
**dadurch gekennzeichnet, dass**
die kalte Seitenwand (202) einen Vorsprung (1220) aufweist, welcher sich von der kalten Seitenwand (202) über die erste Dicke (T1) hinweg zu einer zweiten Dicke (T2) erstreckt, wobei das Kühlloch (210; 1210) zumindest teilweise in dem Vorsprung (1220) angeordnet ist, und wobei das Kühlloch (210; 1210) einen Diffusor (210b; 218; 318; 418) beinhaltet.

2. Schaufelprofil nach Anspruch 1, wobei die erste Dicke (T1) der kalten Seitenwand (202) den Vorsprung (1220) umgrenzt.

3. Schaufelprofil nach Anspruch 1 oder 2, wobei das Kühlloch (210; 1210) einen Einlass (213) an dem Kernkühldurchgang (190, 194, 196) und einen Auslass (214) an dem äußeren Kühldurchgang (198) beinhaltet, und wobei mindestens einer von dem Einlass (213) und dem Auslass (214) an den Vorsprung (1220) angeordnet ist.

4. Schaufelprofil nach einem der vorstehenden Ansprüche, wobei der Vorsprung (1220) in einem von dem Kernkühldurchgang und dem äußeren Kühldurchgang (190, 194, 196, 198) angeordnet ist, wobei der eine von dem Kernkühldurchgang und dem äußeren Kühldurchgang (190, 194, 196, 198) dazu konfiguriert ist, ein Fluid aufzunehmen, welches sich in einer Strömungsrichtung (F1) bewegt, wobei der Vorsprung (1220) eine Vorder- und eine Hinterfläche (1222, 1224) bezogen auf die Strömungsrichtung (F1) aufweist.

5. Schaufelprofil nach Anspruch 4, wobei der Vorsprung (1220) sowohl in dem Kernkühldurchgang als auch in dem äußeren Kühldurchgang (190, 194, 196, 198) bereitgestellt ist.

6. Schaufelprofil nach Anspruch 4 oder 5, wobei die Vorderfläche (1222) eine eckige und/oder eine weiche Kontur aufweist.

7. Schaufelprofil nach Anspruch 4, 5 oder 6, wobei die Hinterfläche (1224) eine eckige und/oder eine weiche Kontur aufweist.

8. Schaufelprofil nach einem der vorstehenden Ansprüche, wobei das Schaufelprofil (178) eine Turbinenlaufschaufel (69) ist, und wobei die heiße und die kalte Seitenwand (200, 202) integral miteinander sind.

9. Schaufelprofil nach einem der Ansprüche 1 bis 7, wobei das Schaufelprofil (178) eine Statorleitschaufel (63) ist, und wobei die kalte Seitenwand (202) durch ein Umlenkblech (72) bereitgestellt ist, welches durch die heiße Seitenwand (200) getragen wird, wobei das Umlenkblech (72) von der heißen Seitenwand (200) getrennt ist.

10. Schaufelprofil nach Anspruch 9, wobei Rippen und/oder Anschlussfinnen (96) das Umlenkblech (72) bezogen auf die heiße Seitenwand (200) zu tragen.

11. Schaufelprofil nach Anspruch 10, wobei die heiße Seitenwand (200) die Rippen und/oder Anschlussfinnen (96) beinhaltet, welche sich nach innen erstrecken, um das Umlenkblech (72) zu tragen.

12. Gasturbinentriebwerk (20), umfassend:
einen Brennkammerabschnitt (26), welcher fluidisch zwischen einem Verdichterabschnitt (24) und einem Turbinenabschnitt (28) angeordnet ist; und
das Schaufelprofil nach einem der vorstehenden Ansprüche, welches in dem Turbinenabschnitt (28) angeordnet ist.

13. Gussform für ein Schaufelprofil (178), umfassend:
eine Mantel- (2100) und eine Kern-Baugruppe (2000), welche zusammen eine Druck- und eine Saugseitenwand (186, 188) definieren, welche sich in einer Profilsehnenrichtung (C) zwischen einer Vorder- und einer Hinterkante (182, 184) erstrecken, wobei sich die Druck- und die Saugseitenwand (186, 188) in eine radiale Richtung (R) erstrecken, um eine äußere Schaufelprofilfläche (179) bereitzustellen, wobei ein Kernkühldurchgang (190, 194, 196) zwischen der Druck- und der Saugwand (186, 188) in einer Dickenrichtung (T) angeordnet ist und sich radial in Richtung einer Spitze (180) erstreckt;
einen äußeren Kühldurchgang (190, 194, 196), welcher in einer von der Druckseitenwand und der Saugseitenwand (186, 188) angeordnet ist, um eine heiße Seitenwand (200) und eine kalte Seitenwand (202) zu bilden, wobei die heiße Seitenwand (200) einen Abschnitt der äußeren Schaufelprofilfläche (179) definiert, und wobei die kalte Seitenwand (202) einen Abschnitt des Kernkühldurchgangs (190, 194, 196) definiert; und
ein Kühlloch (210, 1210), welches den Kernkühldurchgang und den äußeren Kühldurchgang (190, 194, 196, 198) fluidverbindet, wobei die kalte Seitenwand (202) eine erste Dicke (T1) aufweist,
**dadurch gekennzeichnet, dass**
die kalte Seitenwand (202) einen Vorsprung (1220) aufweist, welcher sich von der kalten Seitenwand (202) über die erste Dicke (T1) hinweg zu einer zweiten Dicke (T2) erstreckt, wobei das Kühlloch (210; 1210) zumindest teilweise in dem Vorsprung (1220) angeordnet ist, und wobei das Kühlloch (210; 1210) einen Diffusor (210b; 218; 318; 418) beinhaltet.

## Revendications

1. Surface portante (178) comprenant :
des parois latérales de pression et d'aspiration (186, 188) s'étendant dans une direction dans le sens de la corde (C) entre les bords d'attaque et de fuite (182, 184), les parois latérales de pression et d'aspiration (186, 188) s'étendant dans une direction radiale (R) pour fournir une surface extérieure de surface portante (179) ;
un passage de refroidissement central (190, 194, 196) agencé entre les parois de pression et d'aspiration (186, 188) dans une direction d'épaisseur (T) et s'étend radialement vers une pointe (180) ;
un passage de refroidissement externe (198) agencé dans l'une des parois latérales de pression et d'aspiration (186, 188) pour former une paroi latérale chaude (200) et une paroi latérale froide (202), dans laquelle la paroi latérale chaude (200) définit une partie de la surface extérieure de surface portante (179) et la paroi latérale froide (202) définit une partie du passage de refroidissement central (190, 194, 196) ; et
un trou de refroidissement (210 ; 1210) reliant de manière fluidique les passages de refroidissement externe et central (190, 194, 196, 198), dans laquelle la paroi latérale froide (202) a une première épaisseur (T1),
**caractérisée en ce que** :
la paroi latérale froide (202) présente une saillie (1220) s'étendant de la paroi latérale froide (202) au-delà de la première épaisseur (T1) jusqu'à une seconde épaisseur (T2), le trou de refroidissement (210 ; 1210) étant agencé au moins partiellement dans la saillie (1220) et le trou de refroidissement (210 ; 1210) comporte un diffuseur (210b ; 218 ; 318 ; 418).

2. Surface portante selon la revendication 1, dans laquelle la première épaisseur (T1) de la paroi latérale froide (202) circonscrit la saillie (1220).

3. Surface portante selon la revendication 1 ou 2, dans laquelle le trou de refroidissement (210 ; 1210) comporte une entrée (213) au niveau du passage de refroidissement central (190, 194, 196), et une sortie (214) au niveau du passage de refroidissement externe (198), et au moins l'une parmi l'entrée (213) et la sortie (214) est agencée au niveau de la saillie (1220) .

4. Surface portante selon une quelconque revendication précédente, dans laquelle la saillie (1220) est agencée dans l'un des passages de refroidissement central et externe (190, 194, 196, 198), l'un des passages de refroidissement central et externe (190, 194, 196, 198) étant configuré pour recevoir un fluide se déplaçant dans une direction d'écoulement (F1), la saillie (1220) a des surfaces avant et arrière (1222, 1224) par rapport à la direction d'écoulement (F1).

5. Surface portante selon la revendication 4, dans laquelle la saillie (1220) est prévue à la fois dans les passages de refroidissement central et externe (190, 194, 196, 198).

6. Surface portante selon la revendication 4 ou 5, dans laquelle la surface avant (1222) a un coin et/ou un contour lisse.

7. Surface portante selon la revendication 4, 5 ou 6, dans laquelle la surface arrière (1224) a un coin et/ou un contour lisse.

8. Surface portante selon une quelconque revendication précédente, dans laquelle la surface portante (178) est une pale de turbine (69), et les parois latérales chaude et froide (200, 202) sont solidaires l'une de l'autre.

9. Surface portante selon l'une quelconque des revendications 1 à 7, dans laquelle la surface portante (178) est une aube de stator (63), et la paroi latérale froide (202) est fournie par un déflecteur (72) supporté par la paroi latérale chaude (200), le déflecteur (72) étant distinct de la paroi latérale chaude (200) .

10. Surface portante selon la revendication 9, dans laquelle des nervures et/ou des ailettes de broche (96) supportent le déflecteur (72) par rapport à la paroi latérale chaude (200).

11. Surface portante selon la revendication 10, dans laquelle la paroi latérale chaude (200) comporte les nervures et/ou les ailettes de broche (96) qui s'étendent vers l'intérieur pour supporter le déflecteur (72).

12. Moteur à turbine à gaz (20) comprenant :
une section de chambre de combustion (26) agencée de manière fluidique entre le compresseur (24) et les sections de turbine (28) ; et
la surface portante selon une quelconque revendication précédente étant agencée dans la section de turbine (28).

13. Moule de coulée pour une surface portante (178) comprenant :
une coque (2100) et un ensemble noyau (2000) définissant ensemble des parois latérales de pression et d'aspiration (186, 188) s'étendant dans une direction dans le sens de la corde (C) entre des bords d'attaque et de fuite (182, 184), les parois latérales de pression et d'aspiration (186, 188) s'étendant dans une direction radiale (R) pour fournir une surface extérieure de surface portante (179), un passage de refroidissement central (190, 194, 196) est agencé entre les parois de pression et d'aspiration (186, 188) dans une direction d'épaisseur (T) et s'étend radialement vers une pointe (180) ;
un passage de refroidissement externe (190, 194, 196) agencé dans l'une des parois latérales de pression et d'aspiration (186, 188) pour former une paroi latérale chaude (200) et une paroi latérale froide (202), dans lequel la paroi latérale chaude (200) définit une partie de la surface extérieure de surface portante (179) et la paroi latérale froide (202) définit une partie du passage de refroidissement central (190, 194, 196) ; et
un trou de refroidissement (210, 1210) relie de manière fluidique les passages de refroidissement externe et central (190, 194, 196, 198), et la paroi latérale froide (202) a une première épaisseur (T1), **caractérisé en ce que** :
la paroi latérale froide (202) présente une saillie (1220) s'étendant de la paroi latérale froide (202) au-delà de la première épaisseur (T1) jusqu'à une seconde épaisseur (T2), le trou de refroidissement (210 ; 1210) étant agencé au moins partiellement dans la saillie (1220), et le trou de refroidissement (210 ; 1210) comporte un diffuseur (210b ; 218 ; 318 ; 418).
